(19) Europäisches Patentamt
European Patent Office
Office européen des brevets

(11) **EP 3 268 928 B1**

(12) **EUROPÄISCHE PATENTSCHRIFT**

(45) Veröffentlichungstag und Bekanntmachung des Hinweises auf die Patenterteilung:
**24.07.2019  Patentblatt 2019/30**

(21) Anmeldenummer: **16700954.7**

(22) Anmeldetag: **13.01.2016**

(51) Int Cl.:
*G06T 3/40* (2006.01)      *B60R 1/00* (2006.01)

(86) Internationale Anmeldenummer:
**PCT/EP2016/050506**

(87) Internationale Veröffentlichungsnummer:
**WO 2016/142079 (15.09.2016 Gazette 2016/37)**

(54) **VERFAHREN ZUM ZUSAMMENSETZEN VON ZWEI BILDERN EINER FAHRZEUGUMGEBUNG EINES FAHRZEUGES UND ENTSPRECHENDE VORRICHTUNG**

METHOD FOR COMBINING TWO IMAGES OF VEHICLE SURROUNDINGS OF A VEHICLE, AND CORRESPONDING DEVICE

PROCÉDÉ POUR ASSEMBLER DEUX IMAGES DE L'ENVIRONNEMENT D'UN VÉHICULE ET DISPOSITIF CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2015   DE 102015204213**

(43) Veröffentlichungstag der Anmeldung:
**17.01.2018   Patentblatt 2018/03**

(73) Patentinhaber: **Robert Bosch GmbH**
**70442 Stuttgart (DE)**

(72) Erfinder:
• **ESPARZA GARCÍA, José Domingo**
**70178 Stuttgart (DE)**
• **CANO, Raphael**
**70180 Stuttgart (DE)**

(56) Entgegenhaltungen:
**EP-A1- 2 192 552        EP-A1- 2 482 557**
**WO-A1-2010/119734    DE-A1-102011 088 332**

EP 3 268 928 B1

**Beschreibung**

Die vorliegende Erfindung betrifft ein Verfahren zum Zusammensetzen von zwei Bildern einer Fahrzeugumgebung eines Fahrzeuges und eine Vorrichtung zum Darstellen einer Fahrzeugumgebung eines Fahrzeuges.

Stand der Technik

Aus dem Stand der Technik sind Fahrerassistenz-Systeme für Fahrzeuge bekannt, die Fahrerassistenz-Funktionen aufweisen, die einen Fahrer eines Fahrzeuges mit einem solchen Fahrerassistenz-System beispielsweise beim Manövrieren unterstützen. Die Fahrerassistenz-Funktionen können ermöglichen, dass dem Fahrer ein Nahbereich der Fahrzeugumgebung angezeigt wird, um so eine Kollision mit sich außerhalb eines Sichtbereiches des Fahrers befindlichen Hindernissen zu vermeiden. Die Fahrerassistenz-Funktionen können ferner ermöglichen, dass ein Teil von durch den Fahrer bei einem Manövrieren durchzuführenden Tätigkeiten übernommen wird, um den Komfort beim Manövrieren zu erhöhen. Die Fahrerassistenz-Funktionen können weiterhin ermöglichen, dass die von dem Fahrer beim Manövrieren durchgeführten Tätigkeiten überwacht werden, so dass bei Vorliegen von Gefahrensituationen automatisch in einen Ablauf eines aktuellen Manövriervorganges eingegriffen werden kann. Die Fahrerassistenz-Funktionen können auch ermöglichen, dass das Fahrzeug auch in Abwesenheit des Fahrers automatisch geführt werden kann.

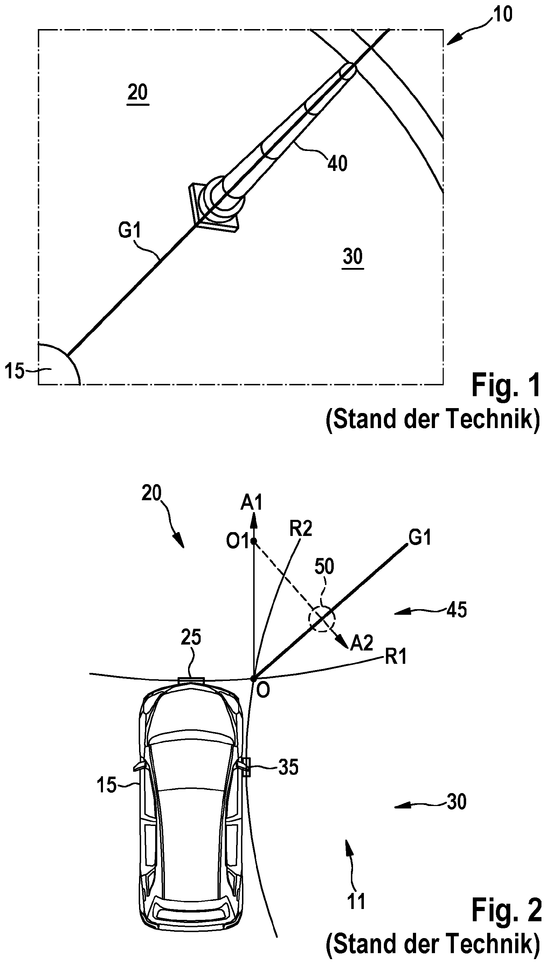

Aus dem Stand der Technik sind ferner Rundumsicht-Kamerasysteme für Fahrzeuge bekannt, die eine zusammengesetzte Darstellung einer Fahrzeugumgebung eines Fahrzeuges mit einem solchen Rundumsicht-Kamerasystem anzeigen können. Üblicherweise umfassen Rundumsicht-Kamerasysteme mehrere Kameras, die derartig an dem Fahrzeug angebracht sind, dass diese eine 360°-Visualisierung der Fahrzeugumgebung ermöglichen. Typischerweise umfasst ein solches Rundumsicht-Kamerasystem vier Kameras, die jeweils Bilder der Fahrzeugumgebung aufnehmen können. Zur Erzeugung einer Fahrzeugumgebungsdarstellung aus einer virtuellen Perspektive werden die von den vier Kameras aktuell aufgenommenen Bilder zusammengesetzt, indem diese Bilder unter Verwendung von Daten bezüglich intrinsischer und extrinsischer Kalibrierungsparameter der vier Kameras auf eine Schüsseloberfläche oder eine ähnliche Projektionsoberfläche projiziert werden. In der Figur 1 ist eine Teilfläche 10 einer solchen Fahrzeugumgebungsdarstellung dargestellt. Darin zu erkennen sind das Fahrzeug 15, zwei Bildbereiche 20, 30 der Fahrzeugumgebungsdarstellung, die zwei Bildern entsprechen, die von zwei an dem Fahrzeug 15 benachbart angebrachten Kameras der vier Kameras aufgenommen worden sind. Diese zwei Bildbereiche 20, 30 grenzen aneinander an und werden durch eine fest positionierte Grenzlinie G1 voneinander getrennt. Nachteilig dabei ist, dass die fest positionierte Grenzlinie G1 einen Bildabschnitt 40 der Fahrzeugumgebungsdarstellung, der ein sich in einem Überschneidungsbereich von zwei Erfassungsbereichen der zwei am Fahrzeug 15 benachbart angeordneten Kameras befindliches Objekt abbildet, überschneiden kann. Dies ist aus der Figur 1 leicht ersichtlich.

Algorithmen, die beim Zusammensetzen der Bilder der vier Kameras üblicherweise verwendet werden, bestimmen eine innerhalb eines vorbestimmten und sich um eine jede Grenzlinie G1 erstreckenden Teilbildbereiches der Fahrzeugumgebungsdarstellung darzustellende Farbe durch ein Mischen von Farben der an der entsprechenden Grenzlinie G1 angrenzenden Bildbereiche 20, 30 der Fahrzeugumgebungsdarstellung. Aus diesem Grund wird beispielsweise nur ein Sockel eines sich in einem Überschneidungsbereich der zwei Erfassungsbereiche der zwei entsprechenden am Fahrzeug 15 benachbart angebrachten Kameras befindlichen Objektes in der Fahrzeugumgebungsdarstellung richtig abbildet. Dies ist aus der Figur 1 auch leicht ersichtlich.

Figur 2 zeigt die Fahrzeugumgebungsdarstellung 11, zu der die in der Figur 1 dargestellte Teilfläche gehört. In der Fahrzeugumgebungsdarstellung 11 ist das Fahrzeug 15 zusammen mit dessen Fahrzeugumgebung abgebildet. In der Fahrzeugumgebungsdarstellung 11 sind ferner die in der Figur 1 dargestellten Bildbereiche 20, 30, die den zwei mittels der zwei an dem Fahrzeug 15 benachbart angebrachten Kameras 25, 35 aktuell aufgenommenen Bildern entsprechen, und die sich zwischen diesen zwei Bildbereichen 20, 30 erstreckenden Grenzlinie G1 dargestellt. Dabei entspricht ein erster Bildbereich 20 der zwei Bildbereiche 20, 30 dem mittels einer ersten Kamera 25 der zwei Kameras 25, 35 aktuell aufgenommenen Bild und ein zweiter Bildbereich 30 der zwei Bildbereiche 20, 30 dem mittels einer zweiten Kamera 35 der zwei Kameras 25, 35 aktuell aufgenommenen Bild. In der Fahrzeugumgebungsdarstellung 11 sind ferner eine über die erste Kamera 25 verlaufende erste Randlinie R1 eines ersten Erfassungsbereiches der ersten Kamera 25, eine über die zweite Kamera 35 verlaufende zweite Randlinie R2 eines zweiten Erfassungsbereiches der zweiten Kamera 35 und ein Überschneidungsbereich 45 der zwei Erfassungsbereiche abgebildet. Auch zeigt die Fahrzeugumgebungsdarstellung 11 einen Ursprung O, der einen sich gegenüber dem Fahrzeug 15 am nahesten befindlichen Schnittpunkt der zwei Erfassungsbereiche abbildet. Die Fahrzeugumgebungsdarstellung 11 zeigt ferner eine fest positionierte Achse A1, die durch den Ursprung O verläuft und eine gegenüber dem Fahrzeug 15 fest positionierte und durch den vorhin genannten Schnittpunkt der Erfassungsbereiche verlaufende Gerade abbildet. Die Fahrzeugumgebungsdarstellung 11 zeigt auch einen zu Erklärungszwecken beispielhaft ausgewählten kreisförmigen Ausschnitt 50, der sich mit einem vorbestimmten und sich um die Grenzlinie G1 erstreckenden Teilbildbereich der Fahrzeugumgebungsdarstellung 11 überlappt, dessen Farbe durch ein Mischen der Farben der zwei in der Figur 2 dargestellten Bildbereiche 20, 30 bestimmt wird. Dabei weist der kreisförmige Ausschnitt 50 ein Zentrum auf, das auf der Grenzlinie G1 positioniert ist und durch das eine weitere Achse A2 verläuft, die senkrecht zu der Grenzlinie G1 positioniert ist. Ein weiterer Ursprung, der mit einem Schnittpunkt zwischen der fest positionierte Achse A1 und der weiteren Achse A2 übereinstimmt, wird mit O1 bezeichnet.

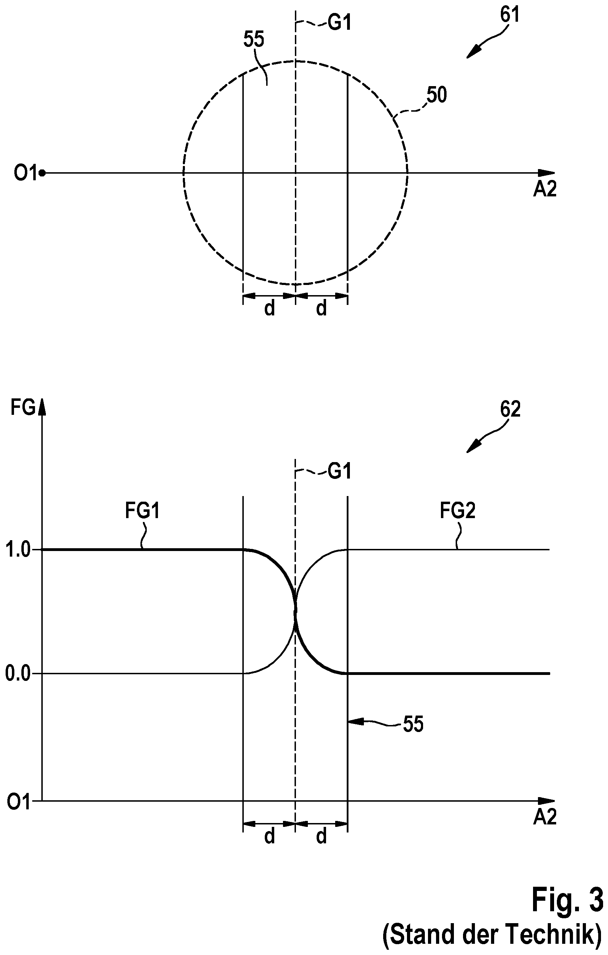

Figur 3 zeigt ein Diagramm 61, in dem der kreisförmige Ausschnitt 50 aus der Figur 2 vergrößert dargestellt ist. Darin zu erkennen sind der weitere Ursprung O1, die weitere Achse A2 und ein senkrecht auf der weiteren Achse A2 verlaufender Teilausschnitt 55 des kreisförmigen Ausschnittes 50, der das Zentrum des kreisförmigen Ausschnittes 50 umfasst. Der Teilausschnitt 55 zeigt einen Teil des vorbestimmten und sich um die Grenzlinie G1 erstreckenden Teilbildbereiches der Fahrzeugumgebungsdarstellung 11. Leicht zu erkennen ist, dass der vorbestimmte Teilbildbereich der Fahrzeugumgebungsdarstellung 11 parallel zu der Grenzlinie G1 verläuft und auf beiden Seiten der Grenzlinie G1 eine Breite d aufweist.

Figur 3 zeigt ferner ein weiteres Diagramm 62, in dem eine erste Farbgewichtungsfunktion FG1 für eine in dem ersten Bildbereich 20 der Objektkarte 11 vorkommenden ersten Farbe F1 der zwei Farben F1, F2 und eine zweite Farbgewichtungsfunktion FG2 für eine in dem zweiten Bildbereich 30 der Objektkarte 11 vorkommenden zweite Farbe F1 der zwei Farben F1, F2 jeweils in Abhängigkeit von einem von dem weiteren Ursprung O1 entlang der weiteren Achse A2 betrachteten Abstand dargestellt sind. Das weitere Diagramm 62 zeigt auch den Teilausschnitt 55 des kreisförmigen Ausschnittes 50 und die Grenzlinie G1. Eine Achse, die von den Farbgewichtungsfunktionen FG1, FG2 annehmbare Werte angibt, wird in dem Diagramm 62 mit FG gekennzeichnet.

Aus dem weiteren Diagramm 62 und unter Berücksichtigung der Tatsache, dass der kreisförmige Ausschnitt 50 und folglich auch sein Zentrum überall entlang der Grenzlinie G1 positioniert werden kann, ist ersichtlich, dass innerhalb des ersten Bildbereiches 20 und außerhalb des vorbestimmten und sich um die entsprechende Grenzlinie G1 erstreckenden Teilbildbereiches der Fahrzeugumgebungsdarstellung 11 die erste Farbgewichtungsfunktion FG1 einen maximalen Wert von 1 und die zweite Farbgewichtungsfunktion FG2 einen minimalen Wert von 0 annimmt. Ferner ist auch ersichtlich, dass innerhalb des zweiten Bildbereiches 30 und außerhalb des vorbestimmten Teilbildbereiches der Fahrzeugumgebungsdarstellung 11 die erste Farbgewichtungsfunktion FG1 einen minimalen Wert von 0 und die zweite Farbgewichtungsfunktion FG2 einen maximalen Wert von 1 annimmt. Weiterhin ist auch ersichtlich, dass innerhalb des vorbestimmten Teilbildbereiches der Fahrzeugumgebungsdarstellung 11 ein von der ersten Farbgewichtungsfunktion FG1 angenommener Wert kontinuierlich von 1 auf 0 abnimmt und ein von der zweiten Farbgewichtungsfunktion FG2 angenommener Wert kontinuierlich von 0 auf 1 zunimmt. Folglich wird die innerhalb des vorbestimmten Teilbildbereiches der Fahrzeugumgebungsdarstellung 11 vorkommende Farbe F3 durch ein gemäß der Relation (1) erfolgendes Mischen der ersten Farbe F1 und der zweiten Farbe F2 bestimmt.

$$F3 = F1 \cdot FG1 + F2 \cdot FG2 \qquad\qquad (1)$$

Mit anderen Worten, wird die Farbe $F3_i$ eines jeden sich in dem vorbestimmten Teilbildbereich der Fahrzeugumgebungsdarstellung 11 befindlichen Pixels i durch ein derartig von einem Abstand des entsprechenden Pixels i zu der Grenzlinie G1 abhängiges Mischen der von dem entsprechenden Pixel i in den zwei Bildbereichen 20, 30 aufweisenden zwei Farben $F1_i$, $F2_i$ bestimmt, dass ein weicher Farbübergang zwischen den zwei Bildbereichen 20, 30 der Fahrzeugumgebungsdarstellung 11 gewährleistet wird.

Aus dem Dokument DE 10 2009 036 200 A1 ist ein Verfahren zur Überwachung einer Fahrzeugumgebung eines Fahrzeugs bekannt, wobei die Fahrzeugumgebung und in dieser vorhandene Objekte mittels zumindest einer ersten Bilderfassungseinheit und einer zweiten Bilderfassungseinheit, deren Erfassungsbereiche einen gemeinsamen Überschneidungsbereich aufweisen, erfasst werden. Dabei wird aus mittels der Bilderfassungseinheiten erfassten Bildern durch eine Bildbearbeitungseinheit eine Fahrzeugumgebungsdarstellung erzeugt, welches das Fahrzeug und die Fahrzeugumgebung aus einer Vogelperspektive zeigt. Ferner wird in Abhängigkeit von ermittelten Positionen der Objekte und einer bekannten Ausrichtung der Bilderfassungseinheiten ein Verlauf zumindest einer Grenzlinie zwischen einem ersten Bildbereich und einem zweiten Bildbereich in der Fahrzeugumgebungsdarstellung derart vorgegeben, dass die Grenzlinie abseits der Objekte verläuft. Dabei können die Bilderfassungseinheiten Kameras sein.

Aus dem Dokument EP 2 482 557 A1 ist ein Fahrerassistenzsystem mit einer Bildzusammensetzungseinheit, einer Hinderniserfassungseinheit und einer Hindernisbewegungsrichtungs-Vorhersageeinheit bekannt. Die Bildzusammensetzungseinheit ist dazu ausgebildet, Bilder einer Vielzahl von Kameras zusammenzusetzen und ein Einzelbild aus einer Vogelperspektive auf der Basis der Bilder der Vielzahl der Kameras und einer von einer Referenzeinheit ausgewählten Mappingtabelle zu generieren. Die Hinderniserfassungseinheit ist dazu ausgebildet, ein sich in einer Umgebung einer Fahrzeug befindliches Hindernis zu erfassen. Die Vorhersageeinheit ist dazu ausgebildet, eine Bewegungsrichtung und eine Geschwindigkeit eines jeden von der Hinderniserfassungseinheit erfassten Hindernisses vorherzusagen und eine Grenzlinie zwischen Bildern der Vielzahl von Kameras derart zu bestimmen, dass die Grenzlinie kein Hindernis überschneidet. Ein ähnliches System ist auch aus dem Dokument WO 2010/119734 A1 bekannt.

Offenbarung der Erfindung

Erfindungsgemäß wird ein Verfahren zum Zusammensetzen von zwei Bildern einer Fahrzeugumgebung eines Fahrzeuges bereitgestellt. Dabei werden die Bilder der Fahrzeugumgebung mittels zwei an dem Fahrzeug benachbart angebrachter Kameras aufgenommen, deren Erfassungsbereiche einen gemeinsamen Überschneidungsbereich aufweisen. Das erfindungsgemäße Verfahren umfasst einen Schritt eines jeweiligen Zusammensetzens der zwei mittels der zwei Kamers aktuell aufgenommenen Bilder zur Erzeugung einer aus einer virtuellen Perspektive darzustellenden Fahrzeugumgebungsdarstellung. Dabei erstreckt sich eine Grenzlinie zwischen zwei den aktuell zusammengesetzten Bildern entsprechenden Bildbereichen der Fahrzeugumgebungsdarstellung. Das erfindungsgemäße Verfahren umfasst ferner einen Schritt eines Empfangens oder Erzeugens einer Objektkarte der Fahrzeugumgebung. Ferner umfasst das erfindungsgemäße Verfahren einen Schritt eines Erzeugens eines Messsignals anhand einer relativ zu einem Ursprung der Objektkarte betrachteten und mittels aus der Objektkarte extrahierter Daten bestimmten Position eines vordefinierten Teilabschnittes eines ein sich in dem Überschneidungsbereich befindliches Objekt abbildenden Bildabschnittes der Objektkarte. Auch umfasst das erfindungsgemäße Verfahren einen Schritt eines Bestimmens einer aktuellen
Position der Grenzlinie in Abhängigkeit von einer Auswertung des Messsignals. Das erfindungsgemäße Verfahren umfasst ferner einen Schritt eines Rotierens einer sich von dem Ursprung der Objektkarte zu dem Bildrand der Objektkarte erstreckenden Referenzlinie gegenüber einer in der Objektkarte durch ihren Ursprung verlaufenden fest positionierten Achse. Dabei erfolgt das Rotieren derartig, dass ein Abtasten einer gesamten Fläche des das Objekt abbildenden Bildabschnittes der Objektkarte durch die Referenzlinie erfolgt. Ferner umfasst das erfindungsgemäße Verfahren einen Schritt eines Bestimmens eines als Signal zu verwendenden Verlaufes eines Abstandes zwischen dem Ursprung der Objektkarte und einem beim Rotieren der Referenzlinie vorkommenden und sich dabei innerhalb des vordefinierten Teilabschnittes des das Objekt abbildenden Bildabschnittes der Objektkarte in unterschiedlichen Positionen befindlichen Schnittpunkt zwischen der Referenzlinie und dem das Objekt abbildenden Bildabschnitt. Dabei erfolgt das Bestimmen des als Signal zu verwendenden Verlaufes in Abhängigkeit von einem beim Rotieren der Referenzlinie vorkommenden und von der Referenzlinie und der in der Objektkarte verlaufenden fest positionierten Achse gebildeten ersten Winkel. Auch erfolgt das Erzeugen des Messsignals mittels des Signals durch Anwenden einer Glättungsfilterung zur Rauschunterdrückung auf das Signal. Das erfindungsgemäße Verfahren umfasst weiterhin einen Schritt eines Unterteilens des Messsignals in mehrere Teilmesssignale. Dabei erfolgt das Unterteilen derart, dass die Teilmesssignale jeweils nur Abstandswerte aufweisen, die entweder größer oder kleiner als ein zwischen einem Minimum und einem Maximum des Messsignals liegender Schwellenwert sind und jeweils einem einzelnen kontinuierlichen Winkelwertebereich des ersten Winkels entsprechen. Ferner umfasst das erfindungsgemäße Verfahren einen Schritt eines Bestimmens eines jeden Winkelwertebereichs des ersten Winkels, der einem Teilmesssignal entspricht, das nur Abstandswerte aufweist, die größer als der Schwellenwert sind. Das erfindungsgemäße Verfahren umfasst weiterhin auch einen Schritt eines Rotierens der Grenzlinie gegenüber einer in der Fahrzeugumgebungsdarstellung durch ihren Ursprung verlaufenden fest positionierten Achse derartig, dass ein von der Grenzlinie und der in der Fahrzeugumgebungsdarstellung verlaufenden fest positionierten Achse gebildeter dritter Winkel einen in einer Mitte eines größten Winkelwertebereichs der bestimmten Winkelwertebereiche des ersten Winkels liegenden Winkelwert aufweist.

Erfindungsgemäß wird eine Vorrichtung zum Darstellen einer Fahrzeugumgebung eines Fahrzeuges bereitgestellt. Die erfindungsgemäße Vorrichtung weist zwei Kameras zum Aufnehmen von Bildern der Fahrzeugumgebung, eine Bildbearbeitungseinheit und eine Anzeigeeinheit auf. Dabei weisen die zwei an dem Fahrzeug benachbart angebrachten Kameras Erfassungsbereiche mit einem gemeinsamen Überschneidungsbereich auf. Ferner umfasst die erfindungsgemäße Vorrichtung einen Glättungsfilter. Zur Erzeugung einer aus einer virtuellen Perspektive darzustellenden Fahrzeugumgebungsdarstellung setzt die Bildbearbeitungseinheit zwei mittels der zwei Kamers aktuell aufgenommene Bilder der Fahrzeugumgebung gemäß einem erfindungsgemäßen Verfahren zusammen.
Die Unteransprüche zeigen bevorzugte Weiterbildungen der Erfindung.
Vorzugsweise wird die Objektkarte mittels Bildern von an dem Fahrzeug angebrachten Kameras und/oder mittels Sensorsignalen von anderen an dem Fahrzeug angebrachten Sensoren zur Erfassung der Fahrzeugumgebung, wie beispielsweise Ultraschallsensoren, erzeugt.
Bevorzugt umfasst die Fahrzeugumgebungsdarstellung eine dreidimensionale Abbildung der Fahrzeugumgebung und die Objektkarte eine zweidimensionale Abbildung der Fahrzeugumgebung. Weiter bevorzugt verläuft die Grenzlinie von einem Ursprung der Fahrzeugumgebungsdarstellung bis zu deren Bildrand. Dabei bilden der Ursprung der Fahrzeugumgebungsdarstellung und der Ursprung der Objektkarte jeweils einen und denselben gegenüber dem Fahrzeug fest positionierten Punkt, insbesondere einen gegenüber dem Fahrzeug am nahesten liegenden Schnittpunkt der zwei Erfassungsbereiche, ab. Vorzugsweise ist der vordefinierte Teilabschnitt des das Objekt abbildenden Bildabschnittes der Objektkarte ein kontinuierlicher Teil eines Randes des das Objekt abbildenden Bildabschnittes der Objektkarte, der Bildpunkte aufweist, die gegenüber dem Ursprung der Objektkarte jeweils näher als ein jeder Bildpunkt eines restlichen Teils des Randes des das Objekt abbildender Bildabschnitt der Objektkarte liegen.

Bevorzugt erfolgt die Auswertung des Messsignals in Abhängigkeit von einem relativ zu dem Fahrzeug betrachteten aktuellen Standpunkt einer virtuellen Kamera zur Erzeugung der Fahrzeugumgebungsdarstellung.

Vorzugsweise wird die aktuelle Position der Grenzlinie derartig bestimmt, dass diese einen das Objekt abbildenden Bildabschnitt der Fahrzeugumgebungsdarstellung nicht überschneidet.

Vorteilhaft bei der Erfindung ist, dass wenn sich ein in der Fahrzeugumgebung befindliches Objekt nur innerhalb des Überschneidungsbereiches erstreckt, die aktuelle Position der Grenzlinie, in der diese einen das Objekt abbildenden Bildabschnitt der Fahrzeugumgebungsdarstellung nicht überschneidet, in einer sehr einfachen Weise bestimmt werden kann. Folglich wird ein solches Objekt in voller Gesamtgröße in der Fahrzeugumgebungsdarstellung abgebildet, so dass einem Fahrer des Fahrzeuges eine verbesserte Darstellung der entsprechenden Fahrzeugumgebung bereitstellbar ist. So kann der Fahrer besser verstehen, wo genau sich das Objekt befindet und eine Kollision mit diesem deutlich leichter vermeiden.

Bevorzugt verläuft die in der Objektkarte verlaufende fest positionierte Achse außerhalb des das Objekt abbildenden Bildabschnittes der Objektkarte.

Vorzugsweise bilden die in der Fahrzeugumgebungsdarstellung verlaufende fest positionierte Achse und die in der Objektkarte verlaufende fest positionierte Achse jeweils eine und dieselbe gegenüber dem Fahrzeug fest positionierte Gerade ab, die durch den gegenüber dem Fahrzeug fest positionierten Punkt verläuft.

Bei einer anderen sehr vorteilhaften Ausführungsform der Erfindung umfasst das erfindungsgemäße Verfahren einen Schritt eines Prüfens eines Erfüllens einer vorbestimmten Bedingung für das Messsignal. Beim Erfüllen der vorbestimmten Bedingung überschreitet der größte Winkelwertebereich der bestimmten Winkelwertebereiche des ersten Winkels bevorzugt eine vordefinierte Winkelwertebereichsgröße. Beim Erfüllen der vorbestimmten Bedingung entspricht der größte Winkelwertebereich der bestimmten Winkelwertebereiche des ersten Winkels weiterhin bevorzugt Positionen der Referenzlinie, in denen ein von der Referenzlinie und einer weiteren Referenzlinie gebildeter zweiter Winkel die größten seiner beim Rotieren der Referenzlinie vorkommenden Winkelwerte annimmt. Dabei verläuft die weitere Referenzlinie durch den Ursprung der Objektkarte und durch einen den aktuellen Standpunkt der virtuellen Kamera abbildenden Bildpunkt der Objektkarte. Das erfindungsgemäße Verfahren umfasst bevorzugt einen Schritt eines Beibehaltens einer von der Grenzlinie angenommenen Position, wenn das Messsignal die vorbestimmte Bedingung nicht erfüllt. Das erfindungsgemäße Verfahren umfasst weiterhin bevorzugt auch einen Schritt eines Durchführens des Rotierens der Grenzlinie gegenüber der in der Fahrzeugumgebungsdarstellung verlaufenden Achse, wenn das Messsignal die vorbestimmte Bedingung erfüllt.

Bevorzugt ist die erfindungsgemäße Vorrichtung als Rundumsicht-Kamerasystem mit vier Kameras ausgebildet. Zur Erzeugung der aus einer virtuellen Perspektive darzustellenden Fahrzeugumgebungsdarstellung setzt die Bildbearbeitungseinheit zwei mittels von zwei Kameras einer jeden Gruppe von zwei an dem Fahrzeug benachbart angebrachten Kameras der vier Kameras aufgenommene Bilder gemäß einem erfindungsgemäßen Verfahren zusammen. Dabei weisen die zwei an dem Fahrzeug benachbart angebrachten Kameras jeder Gruppe Erfassungsbereiche mit einem gemeinsamen Überschneidungsbereich auf.

Ein weiterer Aspekt der Erfindung betrifft ein Fahrzeug mit einer erfindungsgemäßen Vorrichtung zum Darstellen der Fahrzeugumgebung eines Fahrzeuges.

Kurze Beschreibung der Zeichnungen

Nachfolgend werden Ausführungsbeispiele der Erfindung unter Bezugnahme auf die begleitende Zeichnungen im Detail beschrieben. Für gleiche Komponenten und Parameter werden jeweils gleiche Bezugszeichen verwendet. Jede Komponente und jeder Parameter werden jeweils einmalig eingeführt und bei Wiederholung jeweils als schon bekannt behandelt, unabhängig davon, auf welche Zeichnung oder auf welches Ausführungsbeispiel sich ein jeweils entsprechender Beschreibungsteil, in dem die entsprechende Komponente oder der entsprechende Parameter wiederholt vorkommt, bezieht. In den Zeichnungen ist:

Figur 1    eine Teilfläche einer gemäß dem Stand der Technik erzeugten Fahrzeugumgebungsdarstellung, die ein Fahrzeug und eine Fahrzeugumgebung des Fahrzeuges aus einer virtuellen Perspektive zeigt, wobei die Teilfläche zwei Bildbereiche umfasst, die zwei von zwei am Fahrzeug benachbart angebrachten Kameras aktuell aufgenommene Bilder der Fahrzeugumgebung entsprechen und von einer fest positionierten Grenzlinie voneinander getrennt werden,

Figur 2    die gemäß dem Stand der Technik erzeugte Fahrzeugumgebungsdarstellung, zu der die in der Figur 1 dargestellte Teilfläche gehört, in der die zwei in der Figur 1 dargestellten Bildbereiche und die fest positionierte Grenzlinie zu erkennen sind, wobei ferner die Fahrzeugumgebungsdarstellung einen Ursprung, eine durch den Ursprung verlaufende fest positionierte Achse, einen weiteren Ursprung, eine durch den weiteren Ursprung verlaufende weitere Achse und auch einen beispielhaft ausgewählten kreisförmigen Ausschnitt eines vorbestimmten und sich um die fest positionierte Grenzlinie erstreckenden Teilbildbereiches der Fahrzeugumgebungsdarstellung, dessen Farbe durch ein Mischen von Farben der zwei Bildbereichen bestimmt wird, zeigt,

Figur 3    eine vergrößerte Darstellung des in der Figur 2 dargestellten kreisförmigen Ausschnittes und Verläufe von zwei Farbgewichtungsfunktionen, die zum Mischen der Farben der zwei Bildbereichen der in der Figur 2 dargestellten Fahrzeugumgebungsdarstellung verwendet und jeweils in Abhängigkeit von einem zu dem weiteren Ursprung entlang der weiteren Achse betrachteten Abstand dargestellt werden,

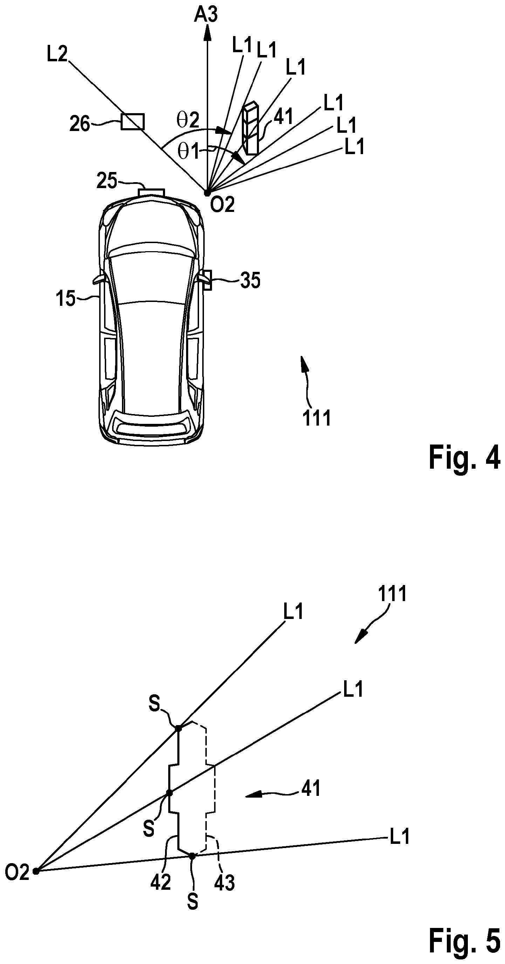

Figur 4    eine Objektkarte der Fahrzeugumgebung des in der Figur 2 abgebildeten Fahrzeuges, die das Fahrzeug, die zwei am Fahrzeug benachbart angebrachten Kameras und ferner eine sich in mehreren Positionen befindliche Referenzlinie zeigt, mittels der ein gemäß einer ersten Ausführungsform der Erfindung zur Bestimmung einer aktuellen Position einer variabel positionierbaren Grenzlinie zu verwendendes Signal erzeugt wird, wobei die variabel positionierbare Grenzlinie die zwei in der Figur 2 dargestellten Bildbereiche voneinander trennt,

Figur 5    eine vergrößerte Darstellung eines ein sich in einem Überschneidungsbereich von Erfassungsbereichen der zwei am Fahrzeug benachbart angebrachten Kameras befindliches Objekt abbildenden Bildabschnittes der Objektkarte,

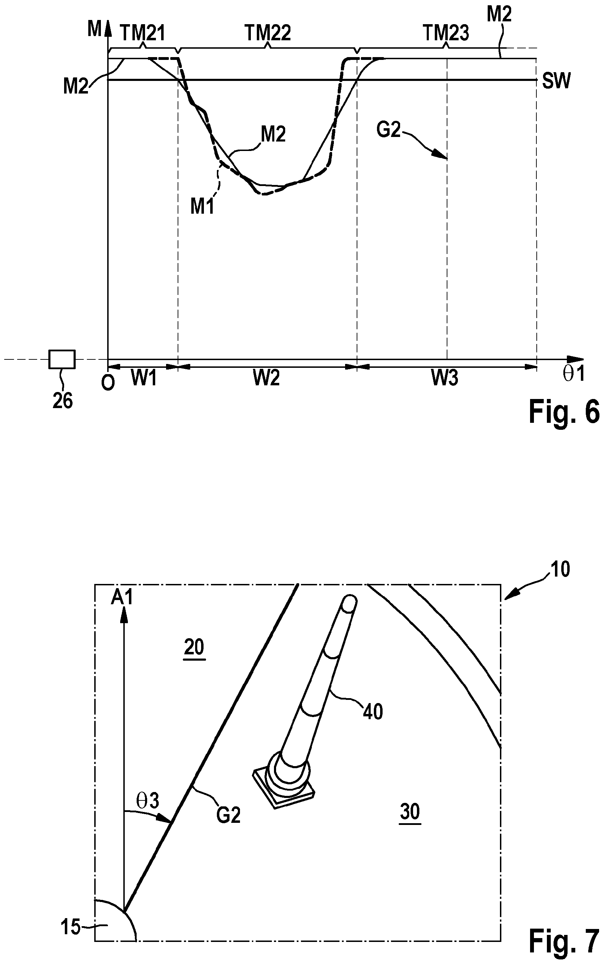

Figur 6    jeweils in Abhängigkeit von der Referenzlinie und einer in der in der Objektkarte verlaufenden fest positionierten Achse gebildeten ersten Winkel dargestellte Verläufe des Signals und eines mittels des Signals erzeugten und zum Bestimmen der aktuellen Position der variabel positionierbaren Grenzlinie auszuwertenden Messsignals, und

Figur 7    die in der Figur 1 dargestellte Teilfläche der in der Figur 2 dargestellten Fahrzeugumgebungsdarstellung zusammen mit der variabel positionierbaren und sich in der aktuellen Position befindlichen Grenzlinie.

Ausführungsformen der Erfindung

Figur 4 zeigt eine Objektkarte 111 der Fahrzeugumgebung des in der Figur 2 abgebildeten Fahrzeuges 15. Die in der Figur 4 dargestellten Objektkarte 111 zeigt das Fahrzeug 15, die zwei am Fahrzeug 15 benachbart angebrachten Kameras 25, 35, und auch einen das sich in dem Überschneidungsbereich der zwei Erfassungsbereiche der zwei Kameras 25, 35 befindliche Objekt abbildenden Bildabschnitt 41 der Objektkarte 111. Figur 4 zeigt ferner einen Ursprung O2 der Objektkarte 111 und eine in der Objektkarte 111 durch ihren Ursprung O2 fest verlaufende Achse A3. Der Ursprung O2 der Objektkarte 111 und der Ursprung O der in der Figur 2 dargestellten Fahrzeugumgebungsdarstellung 11 bilden denselben Schnittpunkt der Erfassungsbereiche der zwei Kameras 25, 35 ab. Die in der Objektkarte 111 verlaufende fest positionierte Achse A3 und die in der in der Figur 2 dargestellten Fahrzeugumgebungsdarstellung 11 verlaufende fest positionierte Achse A1 bilden dieselbe gegenüber dem Fahrzeug 15 fest positionierte Gerade ab. Aus der Figur 4 ist leicht ersichtlich, dass die in der Objektkarte 111 verlaufende fest positionierte Achse A3 außerhalb des das Objekt abbildenden Bildabschnittes 41 der Objektkarte 111 verläuft. Die in der Figur 4 dargestellte Objektkarte 111 zeigt ferner mehrere Positionen einer durch den Ursprung O2 der Objektkarte 111 verlaufenden Referenzlinie L1. Dabei erfolgt ein derartiges Rotieren der Referenzlinie L1 gegenüber der in der Objektkarte 111 verlaufenden fest positionierten Achse A3, dass eine gesamte Fläche des das Objekt abbildenden Bildabschnittes 41 der Objektkarte 111 durch die Referenzlinie L1 abgetastet wird. Ferner wird ein Verlauf eines beim Rotieren der Referenzlinie vorkommenden Abstandes zwischen dem Ursprung O2 der Objektkarte 111 und einem gegenüber diesem am nahesten liegenden Schnittpunkt zwischen der Referenzlinie L1 und dem das Objekt abbildenden Bildabschnitt 41 der Objektkarte in Abhängigkeit von einem beim Rotieren der Referenzlinie L1 vorkommenden und von der Referenzlinie L1 und der in der Objektkarte 111 verlaufenden fest positionierten Achse A3 gebildeten ersten Winkel $\theta 1$ aus mittels eines Bildbearbeitungsalgorithmus aus der Objektkarte 11 extrahierten Daten bestimmt.

Aus der Figur 5 ist leicht ersichtlich, dass der zuvor genannte Schnittpunkt S zwischen der durch den Urspung O2 der Objektkarte 111 verlaufenden Referenzlinie L1 und dem das Objekt abbildenden Bildabschnitt 41 der Objektkarte 111 beim Rotieren der Referenzlinie L1 einen kontinuierlichen Teil 42 eines Randes des das Objekt abbildenden Bildabschnittes 41 der Objektkarte 111 beschreibt. Dabei liegt ein jeder Bildpunkt des kontinuierlichen Teils 42 des Randes des das Objekt abbildenden Bildabschnittes 41 der Objektkarte 111 jeweils näher gegenüber dem Ursprung O2 der Objektkarte 111 als ein jeder Bildpunkt eines restlichen Teils 43 des Randes des das Objekt abbildenden Bildabschnittrandes 41 der Objektkarte 111.

Gemäß einer ersten Ausführungsform der Erfindung wird der in Abhängigkeit von dem ersten Winkel $\theta 1$ be-

stimmte Verlauf als Signal M1 zur Bestimmung einer aktuellen Position einer variabel positionierbaren Grenzlinie G2 zwischen den zwei Bildbereichen 20, 30 der in der Figur 2 dargestellten Fahrzeugumgebungsdarstellung 11 verwendet. Eine Verwendung des Signals M1 gemäß der ersten Ausführungsform der Erfindung wird in Zusammenhang mit der Figur 6 näher beschrieben.

Aus dem Signal M1 wird ein Messsignal M2 durch Anwenden einer Glättungsfilterung zur Rauschunterdrückung auf das Signal M1 erzeugt. Mit anderen Worten wird das Signal M1 zur Erzeugung des Messsignals M2 mittels eines geeigneten Glättungsfilters zur Rauschunterdrückung gefiltert. Figur 6 zeigt einen in Abhängigkeit von dem ersten Winkel $\theta 1$ dargestellten Verlauf des Signals M1 und einen weiteren in Abhängigkeit von dem ersten Winkel $\theta 1$ dargestellten Verlauf des Messsignals M2. Eine Achse, die von dem Signal M1 und von dem Messsignal M2 annehmbare Abstandswerte angibt, wird in der Figur 6 mit M gekennzeichnet.

Dabei wird das Messsignal M2 derartig in mehrere Teilmesssignale TM21, TM22, TM23 unterteilt, dass jedes Teilmesssignal TM21, TM22, TM23 jeweils nur Abstandswerte aufweist, die entweder größer oder kleiner als ein zwischen einem Minimum und einem Maximum des Messsignals M2 liegender Schwellenwert SW sind. Dabei entspricht ein erstes Teilmesssignal TM21 einem ersten kontinuierlichen Winkelwertebereich W1 des ersten Winkels $\theta 1$, ein zweites Teilmesssignal TM22 einem zweiten kontinuierlichen Winkelwertebereich W2 des ersten Winkels $\theta 1$ und ein drittes Teilmesssignal TM23 einem dritten kontinuierlichen Winkelwertebereich W3 des ersten Winkels $\theta 1$. Ferner wird ein jeder Winkelwertebereich W1, W3 des ersten Winkels $\theta 1$ bestimmt, der einem Teilmesssignal TM21, TM23 entspricht, das nur Abstandswerte aufweist, die größer als der Schwellenwert SW sind. Hier umfassen die so bestimmten Winkelwertebereiche W1, W3 des ersten Winkels $\theta 1$ den ersten Winkelwertebereich W1 und den dritten Winkelwertebereich W3 des ersten Winkels $\theta 1$. Auch wird eine weitere Referenzlinie L2 definiert, die von dem Ursprung O2 der Objektkarte 111 über die in der Objektkarte 111 abgebildete virtuelle Kamera 26 verläuft, wobei die virtuelle Kamera 26 in der Objektkarte 111 in einem einen aktuellen Standpunkt der virtuellen Kamera 26 abbildenden Bildpunkt der Objektkarte 111 positioniert ist. Weiterhin wird geprüft, ob eine vorbestimmte Bedingung für das Messsignal M2 erfüllt wird. Beim Erfüllen der vorbestimmten Bedingung überschreitet ein größter Winkelwertebereich W3 der bestimmten Winkelwertebereiche W1, W3 des ersten Winkels $\theta 1$ weiter bevorzugt eine vordefinierte Winkelwertebereichsgröße. Beim Erfüllen der vorbestimmten Bedingung entspricht der größte Winkelwertebereich W3 der bestimmten Winkelwertebereiche W1, W3 des ersten Winkels $\theta 1$ ferner Positionen der Referenzlinie L1, in denen ein von der Referenzlinie L1 und der weiteren Referenzlinie L2 gebildeter zweiter Winkel $\theta 2$ die größten seiner beim Rotieren der Referenzlinie vorkommenden Winkelwerte annimmt. Wenn das weitere Messsignal M2 die vorbestimmte Bedingung nicht erfüllt, wird eine von der variabel positionierbaren Grenzlinie G2 angenommenen Position beibehalten. Wenn das weitere Messsignal M2 die vorbestimmte Bedingung erfüllt, wird die variabel positionierbare Grenzlinie G2 gegenüber der in der in der Figur 2 dargestellten Fahrzeugumgebungsdarstellung 11 verlaufenden fest positionierten Achse A1 derartig rotiert, dass ein von der variabel positionierbare Grenzlinie G2 und der in der Fahrzeugumgebungsdarstellung 11 verlaufenden fest positionierten Achse A1 gebildeter dritter Winkel $\theta 3$ einen in einer Mitte des größten Winkelwertebereichs W3 der bestimmten Winkelwertebereiche W1, W3 des ersten Winkels $\theta 1$ liegenden Winkelwert aufweist. Da hier der größte Winkelwertebereich W3 der bestimmten Winkelwertebereiche W1, W3 des ersten Winkels $\theta 1$ mit dem dritten Winkelwertebereich W3 des ersten Winkels $\theta 1$ übereinstimmt, der die vorbestimmte Bedingung erfüllt, wird die variabel positionierbare Grenzlinie G2 wie zuvor beschrieben rotiert. In der Figur 6 ist die virtuelle Kamera 26 auf einer Achse, die von dem ersten Winkel $\theta 1$ annehmbare Winkelwerte angibt, in einem Punkt positioniert, der einem bei Vorliegen einer entlang der in der Objektkarte 111 verlaufenden fest positionierten Achse A2 verlaufenden Referenzlinie L1 vorkommenden Winkelwert des zweiten Winkels $\theta 2$ entspricht.

Figur 7 zeigt dieselbe Teilfläche 10 der Fahrzeugumgebungsdarstellung 11, die auch in der Figur 1 dargestellt ist, mit dem Unterschied, dass die variabel positionierbare und in der Figur 7 dargestellte Grenzlinie G2 so rotiert wurde, wie es im Zusammenhang mit der Figur 6 beschrieben ist. Aus der Figur 7 ist leicht ersichtlich, dass die rotierte Grenzlinie G2 den das Objekt abbildende Bildabschnitt 40 nicht mehr überschneidet, so dass ein solches sich in dem Überschneidungsbereich der zwei Erfassungsbereiche der zwei am Fahrzeug 15 benachbart angebrachten Kameras 25, 35 befindliches Objekt in voller Gesamtgröße in der Fahrzeugumgebungsdarstellung 11 abgebildet wird. Figur 7 zeigt auch die in der Fahrzeugumgebungsdarstellung 11 verlaufende fest positionierte Achse A1 und auch den zwischen der variabel positionierbaren Grenzlinie G2 und der in der Fahrzeugumgebungsdarstellung 11 fest positionierten Achse A1 gebildeten dritten Winkel $\theta 3$.

Neben der voranstehenden schriftlichen Offenbarung wird hiermit zur weiteren Offenbarung der Erfindung ergänzend auf die Darstellung in den Figuren 4 bis 7 Bezug genommen.

**Patentansprüche**

1. Verfahren zum Zusammensetzen von zwei Bildern einer Fahrzeugumgebung eines Fahrzeuges (15), wobei die Bilder der Fahrzeugumgebung mittels zwei an dem Fahrzeug (15) benachbart angebrachter Kameras (25, 35) aufgenommen werden, deren Erfassungsbereiche einen gemeinsamen Überschneidungsbereich (45) aufweisen, mit folgenden Schritten:

jeweiliges Zusammensetzen der zwei mittels der zwei Kameras (25, 35) aktuell aufgenommenen Bilder zur Erzeugung einer aus einer virtuellen Perspektive darzustellenden Fahrzeugumgebungsdarstellung (11), wobei sich eine Grenzlinie (G2) zwischen zwei den aktuell zusammengesetzten Bildern entsprechenden Bildbereichen (20, 30) der Fahrzeugumgebungsdarstellung (11) erstreckt, und Empfangen oder Erzeugen einer Objektkarte (111) der Fahrzeugumgebung, **gekennzeichnet durch**:

Erzeugen eines Messsignals (M2) anhand einer relativ zu einem Ursprung (O2) der Objektkarte (111) betrachteten und mittels aus der Objektkarte (111) extrahierter Daten bestimmten Position eines vordefinierten Teilabschnittes (42) eines ein sich in dem Überschneidungsbereich (45) befindliches Objekt abbildenden Bildabschnittes (41) der Objektkarte (111), und

Bestimmen einer aktuellen Position der Grenzlinie (G2) in Abhängigkeit von einer Auswertung des Messsignals (M2),

wobei das Erzeugen des Messsignals (M2) und das Bestimmen der aktuellen Position der Grenzlinie (G2) umfassen:

Rotieren einer sich von dem Ursprung (O2) der Objektkarte (111) zu einem Bildrand der Objektkarte (111) erstreckenden Referenzlinie (L1) gegenüber einer in der Objektkarte (111) durch ihren Ursprung (O2) verlaufenden fest positionierten Achse (A3) derart, dass ein Abtasten einer gesamten Fläche des das Objekt abbildenden Bildabschnittes (41) der Objektkarte (111) durch die Referenzlinie (L1) erfolgt,

Bestimmen eines als Signal (M1) zu verwendenden Verlaufes (M1) eines Abstandes zwischen dem Ursprung (O2) der Objektkarte (111) und einem beim Rotieren der Referenzlinie (L1) vorkommenden und sich dabei innerhalb des vordefinierten Teilabschnittes (42) des das Objekt abbildenden Bildabschnittes (41) der Objektkarte (111) in unterschiedlichen Positionen befindlichen Schnittpunkt (S) zwischen der Referenzlinie (L1) und dem das Objekt abbildenden Bildabschnitt (41) der Objektkarte (111) in Abhängigkeit von einem beim Rotieren der Referenzlinie (L1) vorkommenden und von der Referenzlinie (L1) und der in der Objektkarte (111) verlaufenden fest positionierten Achse (A3) gebildeten ersten Winkel ($\theta$1),

Erzeugen des Messsignals (M2) mittels des Signals (M1) durch Anwenden einer Glättungsfilterung zur Rauschunterdrückung auf das Signal (M1), Unterteilen des Messsignals (M2) in mehrere Teilmesssignale (TM21, TM22, TM23) derart, dass die Teilmesssignale (TM21, TM22, TM23) jeweils nur Abstandswerte aufweisen, die entweder größer oder kleiner als ein zwischen einem Minimum und einem Maximum des Messsignals (M2) liegender Schwellenwert (SW) sind und jeweils einem einzelnen kontinuierlichen Winkelwertebereich (W1, W2, W3) des ersten Winkels ($\theta$1) entsprechen,

Bestimmen eines jeden Winkelwertebereichs (W1, W3) des ersten Winkels ($\theta$1), der einem Teilmesssignal (TM21, TM23) entspricht, das nur Abstandswerte aufweist, die größer als der Schwellenwert (SW) sind, und Rotieren der vordefinierten Grenzlinie (G2) gegenüber einer in der Fahrzeugumgebungsdarstellung (11) durch ihren Ursprung (O) verlaufenden fest positionierten Achse (A1) derart, dass ein von der Grenzlinie (G2) und der in der Fahrzeugumgebungsdarstellung (11) verlaufenden fest positionierte Achse (A1) gebildeter dritter Winkel ($\theta$3) einen in einer Mitte eines größten Winkelwertebereichs (W3) der bestimmten Winkelwertebereiche (W1, W3) des ersten Winkels ($\theta$1) liegenden Winkelwert aufweist.

2. Verfahren nach Anspruch 1, **dadurch gekennzeichnet, dass** die Fahrzeugumgebungsdarstellung (11) eine dreidimensionale Abbildung der Fahrzeugumgebung und die Objektkarte (111) eine zweidimensionale Abbildung der Fahrzeugumgebung umfasst, und/oder die Grenzlinie (G2) von einem Ursprung (O) der Fahrzeugumgebungsdarstellung (11) bis zu deren Bildrand verläuft, wobei der Ursprung (O) der Fahrzeugumgebungsdarstellung (11) und der Ursprung (O2) der Objektkarte (111) jeweils einen und denselben gegenüber dem Fahrzeug (15) fest positionierten Punkt, insbesondere einen gegenüber dem Fahrzeug (15) am nahesten liegenden Schnittpunkt der zwei Erfassungsbereiche, abbilden, und/oder der vordefinierte Teilabschnitt (42) des das Objekt abbildenden Bildabschnittes (41) der Objektkarte (111) ein kontinuierlicher Teil eines Randes des das Objekt abbildenden Bildabschnittes (41) der Objektkarte (111) ist, der Bildpunkte aufweist, die gegenüber dem Ursprung (O2) der Objektkarte (111) jeweils näher als ein jeder Bildpunkt eines restlichen Teils des Randes des das Objekt abbildenden Bildabschnittes (41) der Objektkarte (111) liegen.

3. Verfahren nach einem der Ansprüche 1 oder 2, **dadurch gekennzeichnet, dass** die Auswertung des Messsignals (M2) in Abhängigkeit von einem relativ zu dem Fahrzeug (15) betrachteten aktuellen Standpunkt einer virtuellen Kamera (26) zur Erzeugung der Fahrzeugumgebungsdarstellung (11) erfolgt.

4. Verfahren nach einem der vorangehenden Ansprüche **dadurch gekennzeichnet, dass** die aktuelle Position der Grenzlinie (G2) derart bestimmt wird, dass diese einen das Objekt abbildenden Bildabschnitt (40) der Fahrzeugumgebungsdarstellung (11) nicht überschneidet.

5. Verfahren nach einem der vorangehenden Ansprüche, **dadurch gekennzeichnet, dass** die in der Objektkarte (111) verlaufende fest positionierte Achse (A3) außerhalb des das Objekt abbildende Bildabschnittes (41) der Objektkarte (111) verläuft.

6. Verfahren nach einem der vorangehenden Ansprüche, **dadurch gekennzeichnet, dass** die in der Fahrzeugumgebungsdarstellung (11) verlaufende fest positionierte Achse (A1) und die in der Objektkarte (111) verlaufende fest positionierte Achse (A3) jeweils eine und dieselbe gegenüber dem Fahrzeug (15) fest positionierte Gerade abbilden, die durch den gegenüber dem Fahrzeug (15) fest positionierten Punkt verläuft.

7. Verfahren nach einem der vorangehenden Ansprüche, **gekennzeichnet durch**
Prüfen eines Erfüllens einer vorbestimmten Bedingung für das Messsignal (M2), durch die der größte Winkelwertebereich (W3) der bestimmten Winkelwertebereiche (W1, W3) des ersten Winkels ($\theta$1) eine vordefinierte Winkel-wertebereichsgröße überschreitet und/oder Positionen der Referenzlinie (L1) entspricht, in denen ein von der Referenzlinie (L1) und einer weiteren Referenzlinie (L2) gebildeter zweiter Winkel ($\theta$2) die größten seiner beim Rotieren der Referenzlinie (L1) vorkommenden Winkelwerte annimmt, wobei die weitere Referenzlinie (L2) durch den Ursprung (O2) der Objektkarte (111) und durch einen den aktuellen Standpunkt der virtuellen Kamera (26) abbildenden Bildpunkt der Objektkarte (111) verläuft, Beibehalten einer von der Grenzlinie (G2) angenommenen Position, wenn das Messsignal (M2) die vorbestimmte Bedingung nicht erfüllt, und Durchführen des Rotierens der Grenzlinie (G2) gegenüber der in der Fahrzeugumgebungsdarstellung (11) verlaufenden Achse (A1), wenn das Messsignal (M2) die vorbestimmte Bedingung erfüllt.

8. Vorrichtung zum Darstellen einer Fahrzeugumgebung eines Fahrzeuges (15) aufweisend zwei Kameras (25, 35) zum Aufnehmen von Bildern der Fahrzeugumgebung, eine Bildbearbeitungseinheit und eine Anzeigeeinheit, wobei die zwei an dem Fahrzeug (15) benachbart angebrachten Kameras (25, 35) Erfassungsbereiche mit einem gemeinsamen Überschneidungsbereich (45) aufweisen, **dadurch gekennzeichnet, dass** die Vorrichtung bevorzugt einen Glättungsfilter umfasst und die Bildbearbeitungseinheit zwei mittels der zwei Kameras (25, 35) aktuell aufgenommene Bilder der Fahrzeugumgebung zur Erzeugung einer aus einer virtuellen Perspektive darzustellenden Fahrzeugumgebungsdarstellung (11) gemäß dem Verfahren nach einem der Ansprüche 1 bis 7 zusammensetzt.

## Claims

1. Method for combining two images of a vehicle environment of a vehicle (15), wherein the images of the vehicle environment are recorded by means of two cameras (25, 35), which are attached to the vehicle (15) in adjacent fashion and the capturing regions of which have a common intersection region (45), having the following steps:

respectively combining the two images, instantaneously recorded by the two cameras (25, 35) for producing a vehicle environment presentation (11) that is to be presented from a virtual perspective, wherein a boundary line (G2) extends between two image regions (20, 30) of the vehicle environment presentation (11) that correspond to the instantaneously combined images, and
receiving or producing an object map (111) of the vehicle environment, **characterized by**:

producing a measurement signal (M2) on the basis of a position, which is observed relative to an origin (O2) of the object map (111) and determined by means of data extracted from the object map (111), of a predefined partial portion (42) of an image portion (41) of the object map (111) which images an object located in the intersection region (45), and
determining an instantaneous position of the boundary line (G2) in dependence on an evaluation of the measurement signal (M2),
wherein the producing of the measurement signal (M2) and the determining of the instantaneous position of the boundary line (G2) comprise the following:

rotating a reference line (L1), which extends from the origin (O2) of the object map (111) to an image periphery of the object map (111), with respect to a fixedly positioned axis (A3), which extends in the object map (111) through the origin (O2) thereof, such that scanning of an entire surface of the image portion (41), imaging the object, of the object map (111) through the reference line (L1) is effected, determining a profile (M1), to be used as a signal (M1), of a distance between the origin (O2) of the object map (111) and a point of intersection (S), which occurs upon rotation of the reference line (L1) and in the process is at different positions within the predefined partial portion (42) of the image portion (41), imaging the object, of the object map (111), between the reference line (L1) and the image portion (41), imaging the object, of the object map (111) in dependence on a first angle ($\theta$1) which occurs upon rotation of the reference line (L1) and is formed by the reference line (L1) and the fixedly positioned axis (A3) which extends in the object map (111),

producing the measurement signal (M2) by means of the signal (M1) by applying a smoothing filter for noise suppression to the signal (M1),

dividing the measurement signal (M2) into a plurality of partial measurement signals (TM21, TM22, TM23) such that the partial measurement signals (TM21, TM22, TM23) in each case have only distance values that are either greater than or smaller than a threshold value (SW) situated between a minimum and a maximum of the measurement signal (M2) and in each case correspond to an individual continuous angle value range (W1, W2, W3) of the first angle ($\theta$1),

determining each angle value range (W1, W3) of the first angle ($\theta$1) which corresponds to a partial measurement signal (TM21, TM23) which has only distance values which are greater than the threshold value (SW), and

rotating the predefined boundary line (G2) with respect to a fixedly positioned axis (A1) extending in the vehicle environment presentation (11) through the origin (O) thereof such that a third angle ($\theta$3) formed by the boundary line (G2) and the fixedly positioned axis (A1), which extends in the vehicle environment presentation (11), has an angle value located in a centre of a greatest angle value range (W3) of the determined angle value ranges (W1, W3) of the first angle ($\theta$1).

2. Method according to Claim 1, **characterized in that** the vehicle environment presentation (11) comprises a three-dimensional image of the vehicle environment and the object map (111) comprises a two-dimensional image of the vehicle environment, and/or the boundary line (G2) extends from an origin (O) of the vehicle environment presentation (11) up to the image periphery thereof, wherein the origin (O) of the vehicle environment presentation (11) and the origin (O2) of the object map (111) in each case image one and the same point which is fixedly positioned in relation to the vehicle (15), in particular a point of intersection of the two capturing regions that is located closest with respect to the vehicle (15), and/or the predefined partial portion (42) of the image portion (41), imaging the object, of the object map (111) is a continuous part of a periphery of the image portion (41), imaging the object, of the object map (111) which has image points which are located in each case closer with respect to the origin (O2) of the object map (111) than each image point of a remaining part of the periphery of the image portion (41), imaging the object, of the object map (111).

3. Method according to one of Claims 1 or 2, **characterized in that** the evaluation of the measurement signal (M2) is effected in dependence on an instantaneous location of a virtual camera (26), which is observed relative to the vehicle (15), for producing the vehicle environment presentation (11).

4. Method according to one of the preceding claims, **characterized in that** the instantaneous position of the boundary line (G2) is determined such that the latter does not intersect an image portion (40), imaging the object, of the vehicle environment presentation (11).

5. Method according to one of the preceding claims, **characterized in that** the fixedly positioned axis (A3), extending in the object map (111), extends outside of the image portion (41), imaging the object, of the object map (111).

6. Method according to one of the preceding claims, **characterized in that** the fixedly positioned axis (A1) extending in the vehicle environment presentation (11) and the fixedly positioned axis (A3) extending in the object map (111) in each case image one and the same straight line which is fixedly positioned in relation to the vehicle (15) and extends through the point which is fixedly positioned with respect to the vehicle (15).

7. Method according to one of the preceding claims, **characterized by**
checking a fulfilment of a predetermined condition for the measurement signal (M2), by way of which the greatest angle value range (W3) of the determined angle value ranges (W1, W3) of the first angle ($\theta$1) exceeds a predefined angle value range size and/or corresponds to positions of the reference line (L1) in which a second angle ($\theta$2), formed by the reference line (L1) and a further reference line (L2), assumes the greatest angle values of those occurring upon rotation of the reference line (L1), wherein the further reference line (L2) extends through the origin (O2) of the object map (111) and through an image point of the object map (111) imaging the instantaneous location of the virtual camera (26), retaining a position assumed by the boundary line (G2) if the measurement signal (M2) does not fulfil the predetermined condition, and

performing the rotation of the boundary line (G2) with respect to the axis (A1), extending in the vehicle environment presentation (11), if the measurement signal (M2) fulfils the predetermined condition.

8. Apparatus for presenting a vehicle environment of a vehicle (15), having two cameras (25, 35) for recording images of the vehicle environment, an image processing unit and a display unit, wherein the two cameras (25, 35), which are attached to the vehicle (15) in adjacent fashion, have capturing regions with a common intersection region (45), **characterized in that** the apparatus preferably comprises a smoothing filter and the image processing unit combines two images instantaneously recorded by the two cameras (25, 35) of the vehicle environment to produce a vehicle environment presentation (11), which is to be presented from a virtual perspective, as per the method according to one of Claims 1 to 7.

**Revendications**

1. Procédé pour assembler deux images d'un l'environnement de véhicule d'un véhicule (15), les images de l'environnement de véhicule étant enregistrées au moyen de deux caméras (25, 35) montées côte à côte sur le véhicule (15), dont les zones de capture possèdent une zone de chevauchement (45) commune, comprenant les étapes suivantes :

assemblage respectif des deux images actuellement enregistrées au moyen des deux caméras (25, 35) en vue de générer une représentation de l'environnement de véhicule (11) à représenter depuis une perspective virtuelle, une ligne de délimitation (G2) s'étendant entre deux zones d'image (20, 30) correspondant aux images actuellement assemblées de la représentation de l'environnement de véhicule (11) et

réception ou génération d'une carte d'objet (111) de l'environnement de véhicule, **caractérisé par** :

génération d'un signal de mesure (M2) à l'aide d'une position, observée par rapport à une origine (O2) de la carte d'objet (111) et déterminée à l'aide de données extraites de la carte d'objet (111), d'une portion partielle (42) prédéfinie d'une portion d'image (41) de la carte d'objet (111) qui représente un objet qui se trouve dans la zone de chevauchement (45), et

détermination d'une position actuelle de la ligne de délimitation (G2) en fonction d'une interprétation du signal de mesure (M2),

la génération du signal de mesure (M2) et la détermination de la position actuelle de la ligne de délimitation (G2) comprenant :

rotation d'une ligne de référence (L1) qui s'étend de l'origine (O2) de la carte d'objet (111) à un bord d'image de la carte d'objet (111) par rapport à un axe (A3) positionné de manière fixe qui s'étend dans la carte d'objet (111) à travers son origine (O2) de telle sorte qu'un balayage d'une surface totale de la portion d'image (41) de la carte d'objet (111) qui représente l'objet est effectué par la ligne de référence (L1),

détermination d'un tracé (M1) à utiliser comme signal (M1) d'un écart entre l'origine (O2) de la carte d'objet (111) et un point d'intersection (S), qui apparaît lors de la rotation de la ligne de référence (L1) et se trouve alors à différentes positions à l'intérieur de la portion partielle (42) prédéfinie de la portion d'image (41) de la carte d'objet (111) qui représente l'objet, entre la ligne de référence (L1) et la portion d'image (41) de la carte d'objet (111) qui représente l'objet en fonction d'un premier angle ($\theta$1) qui apparaît lors de la rotation de la ligne de référence (L1) et qui est formé par la ligne de référence (L1) et l'axe (A3) positionné de manière fixe qui s'étend dans la carte d'objet (111), génération du signal de mesure (M2) au moyen du signal (M1) en utilisant un filtrage de lissage servant à atténuer le bruit sur le signal (M1),

subdivision du signal de mesure (M2) en plusieurs signaux de mesure partiels (TM21, TM22, TM23) de telle sorte que les signaux de mesure partiels (TM21, TM22, TM23) ne présentent respectivement que des valeurs d'écart qui sont soit supérieures soit inférieures à une valeur de seuil (SW) située entre un minimum et un maximum du signal de mesure (M2) et correspondent respectivement à une plage de valeurs d'angle (W1, W2, W3) continue unique du premier angle ($\theta$1),

détermination de chaque plage de valeurs d'angle (W1, W3) du premier angle ($\theta$1) qui correspond à un signal de mesure partiel (TM21, TM23) qui présente seulement des valeurs d'écart qui sont supérieures à la valeur de seuil (SW) et

rotation de la ligne de délimitation (G2) prédéfinie par rapport à un axe (A1) positionné de manière fixe qui s'étend dans la représentation de l'environnement de véhicule (11) à travers son origine (O) de telle sorte qu'un troisième angle ($\theta$3) formé par la ligne de délimitation (G2) et l'axe (A1) positionné de manière fixe qui s'étend dans la représentation de l'environnement de véhicule (11) possède une valeur d'angle qui se trouve au centre d'une plage de valeurs d'angles la plus grande (W3) de la plage de valeurs d'angle (W1, W3) déterminée du premier angle ($\theta$1).

2. Procédé selon la revendication 1, **caractérisé en ce que** la représentation de l'environnement de véhicule (11) comprend une représentation tridimensionnelle de l'environnement de véhicule et la carte d'objet (111) une représentation bidimensionnelle de l'environnement de véhicule et/ou la ligne de délimitation (G2) s'étend d'une origine (O) de la représentation de l'environnement de véhicule (11) jusqu'à son bord d'image, l'origine (O) de la représentation de l'environnement de véhicule (11) et l'origine (O2) de la carte d'objet (111) représentant respectivement un seul et même point positionné de manière fixe par rapport au véhicule (15), notamment un point d'intersection des deux zones de capture se trouvant le plus proche par rapport au véhicule (15), et/ou la portion partielle (42) prédéfinie de la portion d'image (41) de la carte d'objet (111) qui représente l'objet est une partie continue d'un bord de la portion d'image (41) de la carte d'objet (111) qui représente l'objet, laquelle possède des pixels qui, par rapport à l'origine (O2) de la carte d'objet (111), se trouvent respectivement plus près que chaque pixel d'une partie restante du bord de la portion d'image (41) de la carte d'objet (111) qui représente l'objet.

3. Procédé selon l'une des revendications 1 ou 2, **caractérisé en ce que** l'interprétation du signal de mesure (M2) est effectuée en fonction d'un emplacement actuel, considéré par rapport au véhicule (15), d'une caméra virtuelle (26) destinée à générer la représentation de l'environnement de véhicule (11).

4. Procédé selon l'une des revendications précédentes, **caractérisé en ce que** la position actuelle de la ligne de délimitation (G2) est déterminée de telle sorte que celle-ci ne chevauche pas une portion d'image (40) de la représentation de l'environnement de véhicule (11) qui représente l'objet.

5. Procédé selon l'une des revendications précédentes, **caractérisé en ce que** l'axe (A3) positionné de manière fixe qui s'étend dans la carte d'objet (111) s'étend en-dehors de la portion d'image (41) de la carte d'objet (111) qui représente l'objet.

6. Procédé selon l'une des revendications précédentes, **caractérisé en ce que** l'axe (A1) positionné de manière fixe qui s'étend dans la représentation de l'environnement de véhicule (11) et l'axe (A3) positionné de manière fixe qui s'étend dans la carte d'objet (111) représentent respectivement une seule et même droite positionnée de manière fixe par rapport au véhicule (15), laquelle s'étend à travers le point positionné de manière fixe par rapport au véhicule (15).

7. Procédé selon l'une des revendications précédentes, **caractérisé par**
le contrôle permettant de déterminer si une condition prédéterminée est remplie pour le signal de mesure (M2), par laquelle la plage de valeurs d'angles la plus grande (W3) de la plage de valeurs d'angle (W1, W3) déterminée du premier angle ($\theta$1) dépasse une taille de plage de valeurs d'angle prédéfinie et/ou correspond à des positions de la ligne de référence (L1) auxquelles un deuxième angle ($\theta$2) formé par la ligne de référence (L1) et une ligne de référence supplémentaire (L2) prend la plus grande de ses valeurs d'angle produites lors de la rotation de la ligne de référence (L1), la ligne de référence supplémentaire (L2) s'étendant à travers l'origine (O2) de la carte d'objet (111) et à travers un pixel de la carte d'objet (111) qui représente l'emplacement actuel de la caméra virtuelle (26), le maintien d'une position adoptée par la ligne de délimitation (G2) lorsque le signal de mesure (M2) ne remplit pas la condition prédéterminée, et
la réalisation de la rotation de la ligne de délimitation (G2) par rapport à l'axe (A1) qui s'étend dans la représentation de l'environnement de véhicule (11) lorsque le signal de mesure (M2) remplit la condition prédéterminée.

8. Dispositif pour représenter un environnement de véhicule d'un véhicule (15), comprenant deux caméras (25, 35) destinées à enregistrer des images de l'environnement de véhicule, une unité de traitement d'images et une unité d'affichage, les deux caméras (25, 35) montées côte à côte sur le véhicule (15) possédant des zones de capture ayant une zone de chevauchement (45) commune, **caractérisé en ce que** le dispositif comporte de préférence un filtre de lissage et l'unité de traitement d'images assemble deux images de l'environnement de véhicule enregistrées actuellement au moyen des deux caméras (25, 35) en vue de générer une représentation de l'environnement de véhicule (11) à représenter depuis une perspective virtuelle conformément au procédé selon l'une des revendications 1 à 7.

10

20

40

G1

30

15

**Fig. 1**
**(Stand der Technik)**

20

A1

O1 R2

50

G1

45

25

O A2

R1

35

15

30

11

**Fig. 2**
**(Stand der Technik)**

61

55

G1

O1

50

A2

d    d

FG

62

G1

FG1

FG2

1.0

55

0.0

O1

A2

d    d

## Fig. 3
(Stand der Technik)

A3

L2

26

θ2

L1 L1

L1

L1

L1

L1

41

θ1

25

O2

35

15

111

**Fig. 4**

111

L1

S

L1

S

41

O2

L1

42 43

S

**Fig. 5**

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009036200 A1
- EP 2482557 A1
- WO 2010119734 A1